# EUROPEAN PATENT APPLICATION

(11) **EP 4 231 382 A1**
(43) Date of publication of application: **23.08.2023**
(21) Application number: 20952842.1
(22) Date of filing: 11.09.2020
(51) Int. Cl.: H01M 4/36

(54) **SILICON-BASED LITHIUM STORAGE MATERIAL AND PREPARATION METHOD THEREFOR**

(71) Applicant: Shanghai Shanshan Tech Co., Ltd., Pudong New Area Shanghai 201209 (CN)
(72) Inventor: MA, Fei, Shanghai 201209 (CN); LIU, Dongdong, Shanghai 201209 (CN); WU, Zhihong, Shanghai 201209 (CN); LI, Fengfeng, Shanghai 201209 (CN)
(74) Representative: karo IP
(86) International application number: PCT/CN2020/114849
(87) International publication number: WO 2022/052054

(57) **Abstract**

The present application provides a silicon-based lithium storage material and a preparation method therefor. The silicon-based lithium storage material comprises: an inner core comprising 0-4 valent silicon element; and a first shell layer, wherein the first shell layer covers or partially covers the inner core, the first shell layer comprises a fluorocarbon compound layer, and the fluorocarbon compound layer comprises a fluorocarbon compound. The silicon-based lithium storage material provided by the technical solution of the present application can improve the characteristics of the silicon-based lithium storage material as the active substance of a lithium ion secondary battery under a high-temperature storage condition, and also improves the cycle characteristic and the initial charging and discharging coulombic efficiency of the secondary battery.

## Description

### TECHNICAL FIELD

The disclosure relates to the field of lithium ion batteries, in particular to a silicon-based lithium storage material and a preparation method thereof.

### BACKGROUND

Although silicon-based materials have significant advantages in lithium storage capacity, the high temperature and safety characteristics of silicon-based materials need to be improved, therefore there are still few commercial applications at present. Solid electrolyte interface (SEI) film plays a key role in silicon-based materials. However, the volume expansion and stress caused by the alloying reaction of silicon-based materials are much higher than those of existing commercial graphite materials, which may lead to cracks of SEI films due to unstable SEI films, and then lead to lithium dendrite growth. In addition, the properties of unbroken SEI films also affect the overall performance of silicon-based materials. Under extreme conditions such as high and low temperature and high current density, the SEI films formed on the surface of lithium electrode itself in electrolyte are unstable, and its mechanical modulus and ionic conductivity may not meet the requirements, which leads to the rapid decline of the cycle performance of lithium battery.

At present, some studies have disclosed a method of making artificial SEI films materials by the reaction of fluoroquine with lithium-silicon alloy. This method is starting from 50nmSi. Nano-silicon reacts with lithium foil at 200°C to generate LiₓSi alloy particles, which are then transferred to the cyclohexane solution of fluoroquine, stirred and dried to obtain the material. This scheme has the following disadvantages: (1) the cost of nano-silicon is high; (2) the inner core is LiₓSi, which has high reactivity. Although a single covering is added to its surface, it is still sensitive to humidity (it loses more than 20% of its gram capacity when it is exposed to 10% humidity for 6 hours), requiring dry storage conditions and easy to react with humid air for combustion; (3) due to the activity, oil-based homogenate (PVDF+NMP) is needed, which has high production cost and is not friendly to the environment; (4) after the reaction of fluoroquine with lithium-silicon alloy, the obtained particles are obviously agglomerated, and the adhesion uniformity of SEI films on the surface is not good.

There is also a study to disclose a lithium ion battery anode SEI film and its segmented preparation method. By adjusting the parameters such as formation temperature, current density, cut-off voltage, baking pressure, baking time and baking temperature, a lithium ion battery anode SEI film with multi-layer structure is prepared. However, this method needs to assemble the cathode sheet, anode sheet and separator into bare battery cells in advance, and then put them into the packaging shell, and then inject electrolyte after baking, and make different kinds of SEI components through complicated formation procedures. There are not only complicated steps of formation, taking out and pressurizing, high-temperature formation and cooling, but also the precise control of external current, potential and ambient temperature is completely relied on to regulate the generation of SEI. It not only requires high equipment progress and operation procedures, but also is easy to cause the target SEI component deviation due to the polarization of the system. Moreover, it is difficult to accurately control the actual distribution of SEI of the material made by this method, which not only greatly reduces the coulombic efficiency for the first time, but also does not improve the cycle performance obviously. Different collocation schemes of positive electrode, electrolyte and negative electrode require detailed and different formation procedures, which are difficult to control, poor in universality and poor in economy of mass production.

Therefore, it is necessary to provide a new silicon-based lithium storage material and preparation method thereof.

### BRIEF SUMMARY

The disclosure provides a silicon-based lithium storage material and a preparation method thereof, which improve the characteristics of the silicon-based lithium storage material as an active material of a lithium ion secondary battery under high-temperature storage conditions, and simultaneously improve the cycle characteristics and initial charge-discharge coulombic efficiency of the secondary battery.

According to some aspects of the present disclosure, a silicon-based lithium storage material is provided. The silicon-based lithium storage material includes: an inner core, including silicon elements with a valence of 0-4; and a first shell layer, the first shell layer covers or partially covers the inner core, the first shell layer includes a fluorocarbon layer, and the fluorocarbon layer includes a fluorocarbon.

In some embodiments of the present application, the first shell layer further includes a carbon material layer, the carbon material layer is located between the inner core and the fluorocarbon layer, and the carbon material layer includes a carbon material.

In some embodiments of the present application, 0<N_{F}/N_{C}≤1.5, wherein N_{F} is the molar amount of fluorine in the first shell layer, and N_{C} is the molar amount of carbon in the first shell layer.

In some embodiments of the present application, the carbon material includes at least one of amorphous carbon or graphitized carbon.

In some embodiments of the present application, the mass of the first shell layer accounts for 0.5%-10% of the total mass of the silicon-based lithium storage material.

In some embodiments of the present application, the thickness of the first shell layer is between 1nm and 50nm.

In some embodiments of the present application, the inner core further includes a doping element R, the doping element R includes at least one of elements of main group I-VI, wherein 0≤N_{R}/NSi _{(0∼4)} ≤1.5, N_{R} is the molar amount of the doping element R, and N_{Si (0∼4)} is the molar amount of silicon elements with a valence of 0-4.

In some embodiments of the present application, the doping element R includes at least one of O, N, C, Li, Mg, Ca, Al, P and Be.

In some embodiments of the present application, the silicon-based lithium storage material further includes a second shell layer, wherein the second shell layer covers or partially covers the first shell layer, and the second shell layer includes a lithium fluoride compound.

In some embodiments of the present application, the mass of the second shell layer accounts for 0.1%-2% of the total mass of the silicon-based lithium storage material.

According to some aspects of the present disclosure, a preparation method for a silicon-based lithium storage material is provided. The method includes: providing an inner core material, wherein the inner core material includes silicon elements with a valence of 0-4; depositing a carbon material on the surface of the inner core material to form a carbon material layer; the first structure further includes silicon grains, and the size of the silicon grains is no more than 10nm; and carring out a fluorination treatment with the carbon material layer, enabling all or part of the carbon material layer to convert into a fluorocarbon layer to form a first shell layer.

In some embodiments of the present application, the fluorination treatment is carried out on the carbon material layer with fluorine-containing gas, and 0<N_{F}/N_{C}≤1.5, wherein N_{F} is the molar amount of fluorine in the first shell layer, and N_{C} is the molar amount of carbon in the first shell layer.

In some embodiments of the present application, the fluorine-containing gas includes at least one of F₂, NF₃ and ClF₃.

In some embodiments of the present application, the temperature of the fluorination treatment is 20°C-600°C.

In some embodiments of the present application, the preparation method further includes: placing the inner core material covered with the first shell layer in a lithium solution; removing the solvent of the lithium solution after the inner core material covered with the first shell adsorbs the lithium solution; carrying out heat treatment process to enable the lithium ions in the lithium solution to react with the inner core material, and a lithium compound is attached to the surface of the first shell layer; and cooling the lithium compound and the first shell layer to a specific temperature, carrying out fluorination treatment on the lithium compound to convert the lithium compound into a lithium fluoride compound, and forming a second shell layer on the surface of the first shell layer.

In some embodiments of the present application, the solvent of the lithium solution includeses at least one of naphthalene, anthracene, tetrahydrofuran and N-methylpyrrolidone.

In some embodiments of the present application, the temperature of the heat treatment process is 400°C-600°C.

In some embodiments of the present application, after the heat treatment process, the lithium ions reacts with the inner core material to form lithium silicate, and the lithium compound attached to the surface of the first shell layer includes at least one of lithium hydroxide and lithium carbonate.

In some embodiments of the present application, the inner core material further includes a doping element R, the doping element R includes at least one of elements of main group I-VI, wherein 0≤N_{R}/NSi _{(0∼4)} ≤1.5, N_{R} is the molar amount of the doping element R, and N_{Si (0∼4)} is the molar amount of silicon elements with a valence of 0-4.

In some embodiments of the present application, the doping element R includes at least one of O, N, C, Li, Mg, Ca, Al, P and Be.

In some embodiments of the present application, the carbon material includes at least one of amorphous carbon or graphitized carbon.

In some embodiments of the present application, the mass of the first shell layer accounts for 0.5%-10% of the total mass of the silicon-based lithium storage material, the mass of the second shell layer accounts for 0.1%-2% of the total mass of the silicon-based lithium storage material.

The silicon-based lithium storage material in the technical scheme of the present application includes an inner core and a first shell layer, wherein the first shell layer covers or partially covers the inner core, and the first shell layer includes a fluorocarbon, and the fluorocarbon may react with lithium ions during the first cycle, and the para-lithium potential (vs.Li⁺/Li) of the reaction is significantly higher than that of the common graphite material. Therefore, after the battery is assembled, the fluorocarbon may preferentially react with lithium salt in the electrolyte at a high potential.

During the first cycle, the fluorine-containing inorganic substance generated by the reaction between the fluorocarbon and lithium ions is attached to the surface layer of the silicon-based lithium storage material, and the fluorine-containing inorganic substance has ceramic properties and a high Young's modulus, which may not only effectively improve the side reaction of the surface layer in the high-temperature cycle process, but also ensure that after the inner core expands and contracts, the lithium ion medium is still partially conducted, thus effectively improving the high-temperature characteristics of the battery; at the same time, it may also prevent the risk of lithium dendrite penetration with low Young's modulus caused by lithium precipitation during high-rate charge and discharge, and avoid safety accidents.

At the same time, the fluorocarbon layer has higher molecular layer spacing and ion diffusivity, which is beneficial to the intercalation and deintercalation of lithium ions, reduces the impedance of the material, and effectively improves the dynamics and stability of the battery.

Further, the first shell layer also include a carbon material layer, which is located between the inner core and the fluorocarbon layer. On the one hand, direct contact between fluorocarbon and the inner core may be avoided; on the other hand, it may ensure the conductivity and reduce the polarization problem at high magnification.

Further, the surface of the first shell layer is covered or partially covered with a second shell layer, and the second shell layer includes a lithium fluoride compound. Fluorinated components in the first shell layer and the second shell layer may not only make the silicon-based lithium storage material obtain a higher first coulombic efficiency, but also obtain a better water system homogenization stability, thus solving the problem that the existing lithiation technology is easy to generate active substances on the surface layer and difficult to homogenize.

### BRIEF DESCRIPTION OF THE DRAWINGS

The following drawings describe the exemplary embodiment disclosed in this application in detail. The same reference numerals indicate similar structures in several views of the drawings. Those skilled in the art may understand that these embodiments are non-limiting and exemplary embodiments. The drawings are only for the purpose of illustration and description, and are not intended to limit the scope of this application. Other embodiments may also fulfill the inventive intent of this application. It should be understood that the drawings are not drawn to scale.
Fig. 1 is a schematic structural diagram of a silicon-based lithium storage material according to an embodiment of the present application;
Fig. 2 is a schematic structural diagram of another silicon-based lithium storage material according to an embodiment of the present application;
Fig. 3 is a schematic structural diagram of another silicon-based lithium storage material according to an embodiment of the present application;
Fig. 4 is a schematic structural diagram of another silicon-based lithium storage material according to an embodiment of the present application;
Fig. 5 is an XRD pattern of a silicon-based lithium storage material obtained by the preparation method of the silicon-based lithium storage material in the embodiment of the present application;
Fig. 6 is the first cycle voltammetric curves of the batteries of Example 1 and Comparative Example 1;
Fig. 7 is the first cycle voltammetric curve of the battery in Example 7 of the present application.

### DETAILED DESCRIPTION

The following description provides the specific disclosure scenarios and requirements of this disclosure in order to enable those skilled in the art to make or use the contents of this disclosure. Various modifications to the disclosed embodiments will be apparent to those skilled in the art, and the general principles defined herein may be applied to other embodiments and s without departing from the scope of this disclosure. Therefore, this disclosure is not limited to the illustrated embodiments, but is to be accorded the widest scope consistent with the claims.

The technical scheme of the present application will be explained in detail with reference to the following examples and drawings.

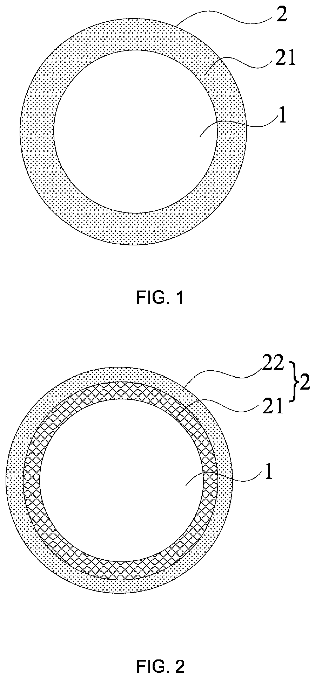

Referring to Fig. 1, the embodiment of the present application provides a silicon-based lithium storage material. The silicon-based lithium storage material includes: an inner core 1, including silicon elements with a valence of 0-4; and a first shell layer 2, the first shell layer 2 covers or partially covers the inner core 1, the first shell layer 2 includes a fluorocarbon layer 21, and the fluorocarbon layer 21 includes a fluorocarbon.

In some embodiments of the present application, the silicon elements with a valence of 0-4 may exist in the form of simple silicon, or in the form of silicon oxide (SiOx, 0<x≤2), or in the form of silicate (M_{y}SiO₃, 1≤y≤2; M is a main group element of I, II and III, such as Li, Na, Mg, Ca or Al, etc). Further, 0≤N_{Si(1∼4)} /Nₛᵢ₍₀₎≤1, where N_{Si(1∼4)} is the molar amount of silicon with a valence of 1-4, and N_{Si(0)} refers to the molar amount of silicon with a valence of 0 in the form of simple substance, and N_{Si(1∼4)} /N_{Si(0)} is the molar ratio between silicon with a valence of 1-4 and elemental silicon. The value of N_{Si(1~4)} /N_{Si(0)} may be realized by adjusting the contents among silicon, silicon oxide and silicate contained in the inner core 1. In some embodiments, the value of N_{Si(1~4)} /N_{Si(0)} is, for example, 0, 0.2, 0.5, 0.8 or 1.

In some embodiments of the present application, the inner core 1 may include a doping element R in addition to a silicon element. And the doping element R includes at least one of elements of main group I-VI. For example, the doping element R includes at least one of O, N, C, Li, Mg, Ca, Al, P and Be. The doping element R may exist in atomic state or ionic state in the inner core 1, and the atoms of the doping element R may combine with each other to form ionic state. For example, the doping element may exist in Mg, Ca or Al, or in metal oxides and metal salts, such as MgO, CaO, Mg₃(PO₄)₂, etc. The doping element R may also be combined with silicon element to form silicon oxide, silicate, etc., for example, MgSiO₃, CaSiO₃ or Li₂SiO₃, etc. The doping element R has the ability to accept electrons, thus the material may be neutral. By adjusting the doping amount of the doping element R, the overall cycle performance and the first coulombic efficiency of the battery may be changed.

In some embodiments of the present application, 0≤N_{R}/N_{Si (0~4)} ≤1.5, wherein, N_{R} is the molar amount of the doping element R, and N_{Si (0∼4)} is the molar amount of silicon elements with a valence of 0-4. N_{R}/N_{Si (0∼4)} is the molar ratio between doping element R and silicon element with a valence of 0-4. By adjusting the doping ratio of the doping element R to the 0-4 valence silicon element, the characteristics of the silicon-based lithium storage material embedded with active lithium at high temperature may be changed and the best results may be obtained. The silicon element with a valence of 0-4 and the doping element R are uniformly distributed in the inner core 1, or are generally uniformly distributed.

The silicon-based lithium storage material according to the embodiment of the present application also includes a first shell layer 2, and the first shell layer 2 partially or completely covers the inner core 1. According to the different manufacturing processes of the silicon-based lithium storage material, the covering degree is also different, and Fig. 1 schematically shows the complete covering. The first shell layer 2 is not necessarily a regular ring-shaped cladding structure as shown in Fig. 1, but the cladding thickness of the first shell layer 2 on the surface of the inner core 1 is approximately close. The mass of the first shell layer 2 accounts for 0.5%-10% of the total mass of the silicon-based lithium storage material, such as 0.5%, 1%, 2%, 3%, 4%, 5%, 6%, 7%, 8% or 9%. The thickness of the first shell layer 2 is, for example, between 1nm and 50nm.

The first shell layer 2 includes a fluorocarbon layer 21, and the fluorocarbon layer 21 includes a fluorocarbon. The surface of the first shell layer 2 is covered with fluorocarbon, thus a directional reaction may occur during the first cycle of the battery. The reaction equation is: CFₓ+xLi→C+xLiF. The para-lithium potential (vs.Li⁺/Li) of the reaction is significantly higher than that of the common graphite material. Therefore, after the battery is assembled, the fluorocarbon may preferentially react with lithium salt in the electrolyte at a high potential. During the first cycle, fluorine-containing inorganic substance may be generated by the reaction. The fluorine-containing inorganic substance has ceramic properties and a high Young's modulus, which may not only effectively improve the side reaction of the surface layer in the high-temperature cycle process, but also ensure that after the inner core 1 expands and contracts, the lithium ion medium is still partially conducted, thus effectively improving the high-temperature characteristics of the battery; at the same time, it may also prevent the risk of lithium dendrite penetration with low Young's modulus caused by lithium precipitation during high-rate charge and discharge, and avoid safety accidents. If there is no fluorocarbon on the surface of the inner core, the materials on the inner core may react at a low potential to generate organic components, such as ROCO₂Li, ROLi, (ROCO₂Li)₂, etc.

The silicon-based lithium storage material in the embodiment of the present application has the advantage of directionally generating lithium fluoride components on the surface of the fluorocarbon layer 21, which is equivalent to adjusting and controlling the components of the SEI film formed by using the silicon-based lithium storage material as the electrode material in the first cycle of the battery. Moreover, because the original layer (fluorocarbon layer 21) has a high molecular layer spacing, it still has a good ion diffusion channel after the film is formed, so it forms a stable SEI film with small impedance, which significantly improves the impedance, cycle and high temperature performance of the material.

Referring to Fig. 2, in some embodiments of the present application, the first shell layer 2 includes not only a fluorocarbon layer 21, but also a carbon material layer 22 located between the inner core 1 and the fluorocarbon layer 21.

In the first shell layer 2, 0<N_{F}/N_{C}≤1.5, wherein N_{F} is the molar amount of fluorine in the first shell layer 2, that is, the molar amount of fluorine in the fluorocarbon layer 21, and N_{C} is the molar amount of carbon in the first shell layer 2, that is, the total molar amount of carbon in the fluorocarbon layer 21 and the carbon material layer 22, and the N_{F}/N_{C} is the molar ratio of fluorine to carbon in the first shell layer 2. Making 0<N_{F}/N_{C}≤1.5 may ensure that the assembled button battery includes both organic and inorganic SEI films on the surface of silicon-based lithium storage materials after the first cycle. Among the SEI film components near the solvent side, the organic SEI film is the main one, and it meets the condition of 0.3<M_{inorganic SEI film}/M_{organic SEI fiim}<2. Among the SEI film components near the covering, the inorganic SEI film is the main one, and it meets the condition of 1.5<M_{inorganic SEI film}/M_{organic SEI film}<7, where M_{inorganic SEI film} represents the mass of inorganic SEI film, M_{organic SEI film} represents the mass of organic SEI film, M_{inorganic SEI film}/M_{organic SEI} represents the mass ratio of organic SEI film to inorganic SEI film. By adjusting the molar ratio of fluorine to carbon in the range of 0<N_{F}/N_{C}≤1.5, the highest potential of dQ/dV at the end of lithium-embedded materials may be adjusted to 0.25V-2.5V, and the composition and structure of SEI film may be changed, thus significantly improving the high temperature and cycle stability of silicon-based materials.

The carbon material layer 22 includes a carbon material including at least one of amorphous carbon or graphitized carbon. In some embodiments of the present application, the carbon material layer 22 includes at least one of an amorphous carbon layer or a graphitized carbon layer. That is, the surface of the first shell layer 2 may include an amorphous carbon layer or a graphitized carbon layer or both. For example, the amorphous carbon layer is directly covered on the surface of the first shell layer 2, and the graphitized carbon layer is covered on the surface of the amorphous carbon layer. Alternatively, the graphitized carbon layer is directly covered on the surface of the first shell layer 2, and the amorphous carbon layer is covered on the surface of the graphitized carbon layer. Alternatively, more than one amorphous carbon layer and more than one graphitized carbon layer are alternately arranged. The "covering" described in the embodiment of the application may be partial covering or complete covering, and the covering degree is different according to the different manufacturing processes of the silicon-based lithium storage material.

Because the amorphous carbon layer is a loose amorphous carbon structure, it plays a buffering role in the lithium intercalation expansion of the silicon-based lithium storage material. And the graphitized carbon layer is a crystalline carbon structure with high graphitization degree, which plays a certain role in restraining the lithium intercalation expansion of silicon-based lithium storage materials and preventing the cracking of the carbon layer and the inactivation of active substances during the lithium deintercalation of silicon-based lithium storage materials. Therefore, the alternating amorphous carbon layers and graphitized carbon layers may better adjust the charging and discharging performance of the silicon-based lithium storage material and improve the cycle life of the battery.

Adding a carbon material layer 22 between the fluorocarbon layer 21 and the inner core 1 not only avoids the direct contact between fluorocarbon and the inner core 1, but also enables the first shell layer 2 to have both fluorinated (fluorocarbon layer 21) and non-fluorinated components (carbon material layer 22). The fluorinated fluorocarbon layer 21 has high molecular layer spacing and ion diffusivity, which is beneficial to the insertion and extraction of lithium ions, reduces the impedance of the material, and effectively improves the dynamics and stability of the battery. The non-fluorinated carbon material layer 22 ensures the electrical conductivity and reduces the polarization problem at high magnification.

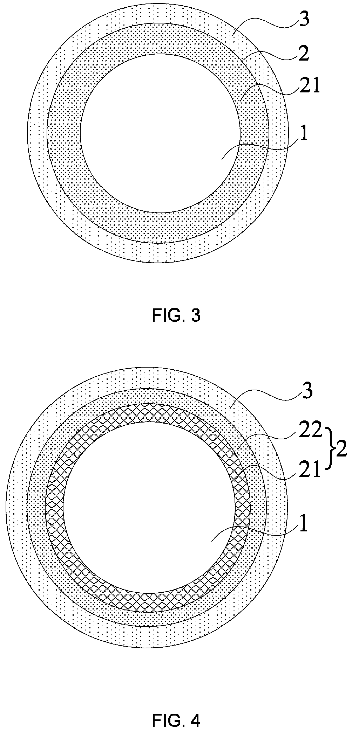

Referring to Figs. 3 and 4, in some embodiments of the present application, the silicon-based lithium storage material may further include a second shell layer 3, which covers or partially covers the first shell layer 2, and the second shell layer 3 includes a lithium fluoride compound. The mass of the second shell layer 3 accounts for 0.1%-2% of the total mass of the silicon-based lithium storage material, such as 0.1%, 0.2%, 0.3%, 0.5%, 1%, 1.5% or 2%. The lithium fluoride compound is lithium fluoride, for example.

The fluorinated components in the first shell layer 2 and the second shell layer 3 may not only make the silicon-based lithium storage material obtain higher first coulombic efficiency, but also obtain better water system homogenization stability, which better solves the problem that the existing lithiation technology is easy to generate active substances on the surface layer and difficult to homogenize.

The embodiment of the application further provides a preparation method of a silicon-based lithium storage material, which includes the following steps:
Step S1, providing a inner core material, wherein the inner core material includes silicon elements with a valence of 0-4;

In the embodiment of the present application, the silicon element with a valence of 0-4 may exist in a simple state of silicon, such as polysilicon; or exists in the form of +4 valence oxidation state of silicon, such as silicon dioxide, and the raw material containing silicon dioxide is, for example, quartz, and specifically, beta-type quartz. The +4 oxidation state of the silicon may also be a silicate, such as a compound with the general formula M_{y}SiO₃, where in, 1≤y≤2, M is a main group element of I, II and III, such as Li, Na, Mg, Ca or Al, etc. Alternatively, the inner core material includes both elemental silicon and silicon-containing compounds. Further, 0≤N_{Si(1∼4)} /N_{Si(0)}≤1, where N_{Si(1~4)} is the molar amount of silicon with a valence of 1-4, and N_{Si(0)} refers to the molar amount of silicon with a valence of 0 in the form of simple substance, and N_{Si(1~4)} /N_{Si(0)} is the molar ratio between silicon with a valence of 1-4 and elemental silicon. The value of N_{si(1~4)} /N_{Si(0)} may be realized by adjusting the contents among silicon, silicon oxide and silicate contained in the inner core 1. In some embodiments, the value of N_{Si(1~4)} /N_{Si(0)} is, for example, 0, 0.2, 0.5, 0.8 or 1.

The inner core material may include a doping element R. And the doping element R includes at least one of elements of main group I-VI. For example, the doping element R includes at least one of O, N, C, Li, Mg, Ca, Al, P and Be. The raw material for providing the doping element R may be simple metal Mg, metal oxide, metal hydroxide, or metal salt, such as MgO, CaO, Mg₃(PO₄)₂, MgSO₃, LiOH, Li₂CO₃, MgSiO₃, CaSiO₃ or Li₂SiO₃.

In some embodiments, the inner core material may be prepared by the following process: providing a first mixture, which at least includes a simple state of silicon, a +4 valence oxidation state of silicon and a doping element R, for example, the first mixture may include polysilicon, beta-type quartz and Li₂CO₃, or it may include polysilicon, beta-type quartz and LiOH, or it may include polysilicon, beta-type quartz and MgCO₃, and adjusting the component ratio of each raw material in the first mixture to make 0≤N_{R}/N_{Si}, _{(0∼4)} ≤1.5, wherein, N_{R} is the molar amount of the doping element R, and N_{Si (0∼4)} is the molar amount of silicon elements with a valence of 0-4; then, under the protection of non-oxidizing gas, the first mixture is heated to a molten state and then cooled to room temperature at a cooling rate of 5°C/S∼30°C/S, the non-oxidizing gas may be an inert gas, such as helium, neon, argon and the like, and the temperature of heating to the molten state is 1500°C∼3000°C, such as 2000°C, 2500°C and the like; after being heated to a molten state, the first mixture is quickly cooled to room temperature at a cooling rate of 5°C/S∼30°C/S (°C/S: Celsius/s), and the rapid cooling process may make the obtained material have the best cycle performance after being made into a battery; after that, pulverization treatment is carried out to obtain the inner core material described in the embodiment of the application.

Step S2, depositing a carbon material on the surface of the inner core material to form a carbon material layer. In some embodiments, the method of depositing a carbon material may include:
In a non-oxidizing atmosphere, a carbon source material passes through a pre-decomposition zone to form a decomposition product, wherein the carbon source material includes more than one of a gaseous carbon source material, a vaporized carbon source material or an atomized carbon source material.

Regulating the flow velocity V_{G} of the decomposition products entering the reaction cavity in the deposition covering area and the mass ratio of the decomposition products to the core material Mc/M, making the inner core material and the decomposition products occur a deposition covering reaction in the deposition covering area, and forming a carbon material layer on the surface of the inner core material. The carbon material layer may include an amorphous carbon layer or a graphitized carbon layer or a composite layer including an amorphous carbon layer and a graphitized carbon layer. Wherein, 0.01≤V_{G}≤100, 0.001≤Mc/M≤1, V_{G} unit is m/min, M_{C} unit is mol/min, and M is the inner core material mass in terms of carbon atoms, and unit is kg. The thickness of carbon material layer is controlled by adjusting the ratio of Mc/M.

The gas for providing the non-oxidizing atmosphere includes, for example, any one or more of hydrogen, nitrogen or inert gas, and is used as a protective gas, a carrier gas and a diluent gas for the reaction in the pre-decomposition zone. The gaseous carbon source material includes hydrocarbons and aldehydes which are gaseous at room temperature, the gaseous carbon source material includes methane, ethane, ethylene, acetylene, propane and propylene, the vaporized carbon source material is a carbon-containing material which is liquid at room temperature but gaseous above room temperature but below the temperature of the pre-decomposition zone, and the vaporized carbon source material includes n-hexane, ethanol and benzene. The atomized carbon source substance is a substance that is difficult to evaporate by heating, and may be made into small droplets by an atomizing device, for example, a substance that is liquid when the temperature is lower than the pre-decomposition zone. The atomized carbon source material includes polyethylene and polypropylene.

In some embodiments of the application, nitrogen-containing substances may be introduced during the deposition covering reaction. The nitrogen-containing substance includes one or more of NH₃, acetonitrile, aniline or butylamine. The amorphous carbon layer and/or graphitized carbon layer doped with nitrogen atoms may be obtained by introducing the nitrogen-containing substance. The amorphous carbon layer and/or graphitized carbon layer doped with nitrogen atoms may further improve the charging and discharging ability of the silicon-based lithium storage material.

Step S3, carring out a fluorination treatment is with the carbon material layer, enabling all or part of the carbon material layer to convert into a fluorocarbon layer to form a first shell layer. The fluorination treatment described in the embodiment of the application may be that fluorine-containing gas reacts with the material of the carbon material layer, thus the material of the carbon material layer is totally or partially fluorinated into fluorocarbon. The fluorine-containing gas may include at least one of F₂, NF₃ and ClF₃.

The fluorination treatment may be carried out in any one of a fluidized bed reactor, a rotary furnace, a vertical moving bed reactor, a tunnel furnace, a batch furnace or a rotary kiln. The temperature of fluorination treatment is 20°C~600°C, such as 20°C , 50°C, 100°C , 150°C , 200°C, 300°C, 400°C or 500°C.

In some embodiments of the application, the degree of fluorination is controlled by regulating the molar ratio between fluorine in the fluorine-containing gas and carbon in the carbon material layer. If the molar amount (N_{F}) of fluorine in the fluorine-containing gas is equivalent to the molar amount (N_{C}) of carbon in the carbon material layer, or if N_{F} is excessive relative to N_{C}, all carbon elements in the carbon material layer combine with fluorine in the fluorine-containing gas to form fluorocarbon. That is, all the carbon material layers are converted into fluorocarbon layers, in other words, the first shell layer formed is a fluorocarbon layer. If N_{F} is small relative to N_{C}, the fluorine element in the fluorine-containing gas combines with some carbon elements in the carbon material layer to form fluorocarbon. That is, some carbon elements in the carbon material layer did not participate in the reaction, so only part of the carbon material layer was converted into a fluorocarbon layer, and some carbon material layer remained unfluorinated, and the formed first shell layer included a fluorinated fluorocarbon layer and an unfluorinated carbon material layer. When the carbon material layer is treated by the fluorine-containing gas, fluorine gradually enters the interior of the carbon material layer from the surface of the carbon material layer, thus the surface of the carbon material layer is fluorinated first, and then fluorinated inward in turn. Therefore, when N_{F} is small relative to N_{C}, the fluorinated fluorocarbon layer is located on the surface of the non-fluorinated carbon material layer, that is, the non-fluorinated carbon material layer is located between the fluorocarbon layer and the inner core material. The non-fluorinated carbon material layer has an isolation function, which avoids the direct contact between the fluorocarbon layer and the core material.

Due to the existence of fluorocarbon layer, the following directional reactions occurred in the first cycle of the battery after the silicon-based lithium storage material was used as electrode material: CFₓ+xLi→C+xLiF. Therefore, inorganic SEI is dominant near the covering side, and organic SEI is dominant near the solvent side on the surface of silicon-based lithium storage materials. Further, when near the solvent side, 0.3<M_{inorganic SEI film}/M_{organic SEI film}<2, under above condition, the battery has the best performance; when near the covering side, 1.5<M_{inorganic SEI film}/M_{organic SEI film}<7, under above condition, the battery has the best performance. Where M_{inorganic SEI film} represents the mass of inorganic SEI film, M_{organic SEI film} represents the mass of organic SEI film. In some embodiments of the present application, the mass ratio of inorganic SEI to organic SEI may be adjusted by adjusting the ratio of the molar amount of fluorine (N_{F}) in the fluorine-containing gas to the molar amount of carbon (N_{C}) in the carbon material layer, for example, 0<N_{F}/N_{C}≤1.5.

In some embodiments of the present application, the adjustment of the ratio of the molar amount (N_{F}) of fluorine in the fluorine-containing gas to the molar amount (N_{C}) of carbon in the carbon material layer may be controlled by the amount of the fluorine-containing gas. For example, the amount of fluorine-containing gas may be adjusted by adjusting the flow rate of the fluorine-containing gas within a certain period of time, or by adjusting the introduction time of the fluorine-containing gas at a fixed flow rate.

In some embodiments, the mass of the first shell layer, that is, the total mass of the fluorinated fluorocarbon layer and the non-fluorinated carbon material layer, accounts for 0.5%-10% of the total mass of the silicon-based lithium storage material.

The silicon-based lithium storage material obtained through the above preparation process has good interface stability during charging and discharging. Optionally, in order to further improve the first coulombic efficiency, the following steps may be taken:
The inner core material covered with the first shell layer is placed in a lithium solution. The solvent of the lithium solution may include at least one of naphthalene, anthracene, tetrahydrofuran and N- methylpyrrolidone, or other solvents that may disperse lithium.

After the inner core material covered with the first shell layer adsorbs the lithium solution, the solvent of the lithium solution is removed. The method of removing solvent may be common drying method, such as vacuum drying may be used. The purpose of adsorbing lithium solution is to adsorb lithium on the surface of the first shell layer. Lithium plays an important role in improving the first coulombic efficiency, and the amount of adsorbed lithium may directly affect the improvement effect of the first coulombic efficiency. The amount of adsorbed lithium may be controlled by adjusting the concentration of lithium solution or soaking time.

Carrying out heat treatment process to make lithium ions in the lithium solution react with the inner core material, and a lithium compound attach to the surface of the first shell layer. The purpose of the heat treatment process is to make the adsorbed lithium enter the surface of the core material and react with the core material. The reaction equation is: SiOx+Li→LiSiOy. The siloxane compound in the inner core material is transformed into irreversible lithium silicate, thus improving the first coulombic efficiency. In some embodiments, the temperature of the heat treatment process is 400°C~600°C, such as 400°C, 500°C, 550°C and so on. At the same time, the following reactions may occur on the surface of the first shell: Li⁺+OH⁻→LiOH ; 2LiOH+CO₂→Li₂CO₃+H₂O. Therefore, a lithium compound may be formed on the surface of the first shell, which may include at least one of lithium hydroxide and lithium carbonate.

After heat treatment process, the inner core material is cooled to a specific temperature, such as room temperature, and then the lithium compound is fluorinated. During fluorination, the material cooled to room temperature may be immersed in hydrofluoric acid. In the immersion process, the hydrofluoric acid reacts with the lithium compound (LiOH , Li₂CO₃): LiOH+HF→LiF+H₂O ; Li₂CO₃+2HF→2LiF+CO₂↑+H₂O. The reaction convert the lithium compound into a lithium fluoride compound, and form a second shell layer on the surface of the first shell layer. The mass of the second shell layer accounts for 0.1%-2% of the total mass of the silicon-based lithium storage material.

The silicon-based lithium storage material with a first shell layer (including a carbon material layer and a fluorocarbon layer) and a second shell layer formed by the method described in the embodiment of the application was tested, and the results are as follows:

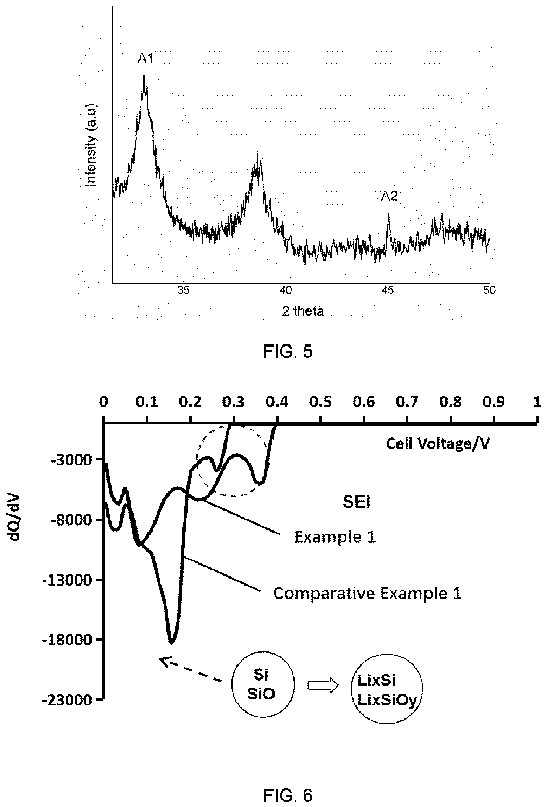

Fig. 5 is an XRD pattern of a silicon-based lithium storage material. According to XRD analysis, in X-ray diffraction measurement using CuK a rays, the diffraction angle 2θ shows the height A1 of the peak belonging to Li₂SiO₃ in the range of 26.5°∼27.2°, and the diffraction angle 20 shows the height A2 of the peak belonging to LiF in the range of 44.5°∼45.0°. And the following conditions are satisfied: 0<A2/A1<0.45. Because the crystallinity of LiF should not be too high, if the crystallinity of LiF is high, the film formed is not dense, which affects the improvement effect of the first coulombic efficiency, so the peak value of LiF should not be too strong.

X-ray photoelectron spectroscopy (XPS) analysis shows that electron binding energy C1s has broad peaks with intensity of I₂₈₈ and I₂₈₃ at 288.4±0.2Ev (C-F bond) and 283.5±0.2eV (amorphous C-C bond), where 0<I₂₈₈/I₂₈₃<0.3, indicating that the first shell layer formed includes C-C bond and C-F bond, respectively corresponding to the carbon material and fluorocarbon in the silicon-based lithium storage material. And the electron binding energy F1s has at least two peaks at 684-694eV, indicating that there are two fluorine compounds in the formed silicon-based lithium storage material, which correspond to fluorocarbon and lithium fluoride compounds in the silicon-based lithium storage material. At the same time, according to XPS depth analysis, after the first cycle, the inorganic SEI film on the surface of the silicon-based lithium storage material mainly includes Li₂CO₃, LiOH , LiF , Li₂O, Li₂CO₃, and the organic SEI film mainly includes Li-O-C compound, and the XPS spectrum of Li on the solvent side is in the range of 52-58eV.

Diffraction ring analysis under transmission electron microscope shows that there are at least two kinds of carbon-carbon layer spacing on the surface in the range of 0.35~0.45nm, in which the differential value between maximum and minimum value is greater than 0.05nm, indicating that the first shell layer formed includes at least two kinds of carbon-carbon layer spacing. This is because fluorine has strong electronegativity and large atomic radius, which makes the original carbon-carbon layer spacing deviate from the original range, so at least two kinds of carbon-carbon layer spacing appear.

The preparation method of the embodiment of the invention has simple process and mass production, and the prepared silicon-based lithium storage material has good dynamic performance, high temperature and cycle stability. The silicon-based lithium storage material includes a first shell layer and a second shell layer, and both the first shell layer and the second shell layer contain fluorine-containing components, therefore, the silicon-based lithium storage material has higher first coulombic efficiency and higher water system homogenization stability, thereby solving the problem that the surface of the silicon-based lithium storage material is difficult to homogenize due to the generation of active substances in the prior art, avoiding additional treatment procedures and reducing the cost. The battery system made of the silicon-based lithium storage material of the embodiment of the invention may significantly reduce or avoid the addition of fluoroethylene carbonate, and is not only suitable for the battery system with positive electrode matching ternary, but also suitable for the lithium cobaltate high-voltage system.

### Example 1

Providing a inner core material, wherein the inner core material includes silicon elements with a valence of 0-4;
Depositing amorphous carbon on the surface of the inner core material to form a carbon material layer, wherein the mass of the amorphous carbon accounts for 3% of the total mass of the silicon-based lithium storage material and is denoted as Me;
At the temperature of 100 °C, carrying out fluorination treatment on the carbon material layer by fluorine gas to enable the carbon material layer to partially convert into a fluorocarbon layer to form a first shell layer. And N_{F}/N_{C}=0.05, wherein N_{F} is the molar amount of fluorine in the fluorine-containing gas and N_{c} is the molar amount of carbon in the carbon material layer.

The prepared silicon-based lithium storage material is applied to the battery system, and the following tests are carried out:
25°C cycle (0.1C):0.1C charge-discharge cycle, 50/100th cycle reversible capacity/initial charge (lithium removal capacity);
45°C cycle (0.1C):0.1C charge-discharge cycle, 50/100th cycle reversible capacity/initial charge (lithium removal capacity);
Rate discharge (lithium intercalation): charge (lithium deintercalation) is fixed at 0.1C, and the capacity ratios of charge (lithium deintercalation) are 0.5C, 1.5C, 3.0C,5.0C and 0.1C respectively;
Rate charging: discharge (lithium intercalation) is fixed at 0.1C, and the discharge (lithium intercalation) capacity ratio is 0.5C, 1.0C, 3.0C, 5.0C and 0.1C respectively.

Specific process data and performance parameters of the formed silicon-based lithium storage material are shown in Table 1. The cyclic voltammetry curve of the battery in the first week was tested, as shown in Figure 6.

### Example 2-6

Specific process description refers to Example 1, and specific process data and performance parameters of the formed silicon-based lithium storage material are shown in Table 1.

### Example 7

Providing a inner core material, wherein the inner core material includes silicon elements with a valence of 0-4.

Depositing amorphous carbon on the surface of the inner core material to form a carbon material layer, wherein the mass of the amorphous carbon accounts for 3% of the total mass of the silicon-based lithium storage material and is denoted as Me.

At the temperature of 100 °C, carrying out fluorination treatment on the carbon material layer by fluorine gas to enable the carbon material layer to partially convert into a fluorocarbon layer to form a first shell layer. And N_{F}/N_{C}=0.1, wherein N_{F} is the molar amount of fluorine in the fluorine-containing gas and N_{c} is the molar amount of carbon in the carbon material layer.
The inner core material covered with the first shell layer is placed in tetrahydrofuran solution of lithium;
After the inner core material covered with the first shell layer adsorbs the tetrahydrofuran solution of lithium, vacuum drying is carried out to remove the tetrahydrofuran;
At 400°C, carrying out heating treatment to enable lithium to enter into the inner core material and react with the inner core material, and a lithium compound is attached to the surface of the first shell layer;
Cooling the lithium compound and the first shell layer to room temperature, immersing the heat-treated material in hydrofluoric acid solution for fluorination treatment, so as to convert the lithium compound into a lithium fluoride compound, and forming a second shell layer on the surface of the first shell layer, wherein the mass of the lithium fluoride compound accounts for 0.2% of the total mass of the silicon-based lithium storage material, and is denoted as M_{LiF}.

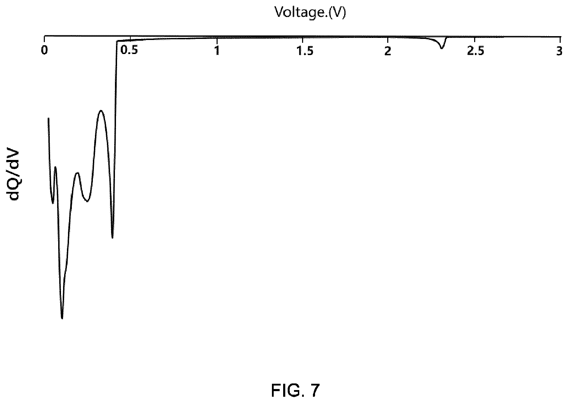

The prepared silicon-based lithium storage material was applied to the battery system and tested. The specific test method is shown in Example 1, and the specific process data and performance parameters of the formed silicon-based lithium storage material are shown in Table 1. The cyclic voltammetry curve of the battery in the first week was tested, as shown in Figure 7.

### Comparative example 1

Providing a inner core material, wherein the inner core material includes silicon elements with a valence of 0-4.

Depositing amorphous carbon on the surface of the inner core material to form a carbon material layer, wherein the mass of the amorphous carbon accounts for 3% of the total mass of the silicon-based lithium storage material and is denoted as Mc.

The prepared silicon-based lithium storage material was applied to the battery system and tested. The specific test method is shown in Example 1, and the specific process data and performance parameters of the formed silicon-based lithium storage material are shown in Table 1. The cyclic voltammetry curve of the battery in the first week was tested, as shown in Figure 6.

### Comparative example 2-6

Specific process description refers to Comparative Example 1, and specific process data and performance parameters of the formed silicon-based lithium storage material refers to Table 1.

### Comparative example 7

According to the mass ratio of lithium fluoride to isopropanol of 1: 10, lithium fluoride was dissolved in isopropanol to obtain solution A. Then, according to the stoichiometric ratio of N_{F}/N_{C}=0.05, the materials prepared in Comparative Example 1 were mixed with solution A to obtain a homogeneous system, which was dried in a vacuum dryer at 120°C to remove isopropanol.

The prepared silicon-based lithium storage material was applied to the battery system and tested. The specific test method is shown in Example 1, and the performance parameters of the formed silicon-based lithium storage material are shown in Table 1.

### Comparative example 8

According to the mass ratio of lithium fluoride, polyaniline and isopropanol of 1: 19: 120, lithium fluoride and polyaniline were added into isopropanol in turn and mixed evenly to obtain solution B. According to the mass ratio of polyaniline to silicon oxide of 1:33, silicon oxide and solution B are mixed and stirred evenly to obtain a uniform system, which is dried in a vacuum dryer at 120°C to remove isopropanol, and the obtained material is crushed again to form a covering layer on the surface of the silicon oxide, which includes lithium fluoride and polyaniline, wherein the mass of lithium fluoride accounts for 5% of the total mass of the covering layer.

The prepared silicon-based lithium storage material was applied to the battery system and tested. The specific test method is shown in Example 1, and the performance parameters of the formed silicon-based lithium storage material are shown in Table 1.

| Table 1: Process parameters and performance parameters of the prepared silicon-based lithium storage materials of Examples 1-7 and Comparative Examples 1-8 | | | | | | | | | | | | | | | | | | |
|---|---|---|---|---|---|---|---|---|---|---|---|---|---|---|---|---|---|---|
| | inner core material | first shell layer | | Second shell layer | 25°Ccycle | | 45°C cycle | | First lithium removal capacity (mAh/g) | First Coulombic efficiency (%) | Rate discharge | | | | Rate charge | | | |
| | | Mc% | NF/NC | MLiF% | 50w | 100w | 50w | 100w | | | 0.5C | 1.5C | 3.0C | 4.0C | 0.5C | 1.5C | 3.0C | 5.0C |
| Examole 1 | Undoped | 3 | 0.05 | / | 72 | 57 | 56 | 33 | 1600 | 76.2 | 85 | 70 | 53 | 36 | 99 | 96 | 92 | 85 |
| Example 2 | Undoped | 3 | 0.1 | / | 72 | 68 | 60 | 54 | 1580 | 75.9 | 88 | 76 | 64 | 41 | 100 | 98 | 95 | 90 |
| Example 3 | Undoped | 5 | 0.2 | / | 70 | 59 | 57 | 47 | 1562 | 75.6 | 86 | 74 | 59 | 37 | 99 | 97 | 93 | 87 |
| Example 4 | Undoped | 5 | 0.2 | / | 74 | 69 | 55 | 57 | 1550 | 75.5 | 88 | 75 | 65 | 42 | 99 | 97 | 94 | 89 |
| Example 5 | Li doped | 3 | 0.5 | / | 66 | 52 | 47 | 23 | 1367 | 88.5 | 84 | 65 | 50 | 34 | 98 | 94 | 90 | 82 |
| Example 6 | Mg doped | 3 | 0.05 | / | 69 | 60 | 44 | 21 | 1420 | 82.8 | 86 | 72 | 56 | 38 | 99 | 97 | 93 | 86 |
| Example 7 | Undoped | 3 | 0.1 | 0.2 | 63 | 58 | 62 | 50 | 1404 | 88.4 | 63 | 51 | 32 | 98 | 92 | 84 | 76 | 73 |
| Comparative Example 1 | Undoped | 3 | 0 | / | 66 | as | 50 | 21 | 1615 | 763 | 82 | 66 | 47 | 28 | 98 | 92 | 89 | 80 |
| Comparative Example 2 | Undoped | 5 | 0 | / | 68 | 50 | 42 | 31 | 1603 | 76 | 85 | 68 | 52 | 37 | 98 | 93 | 90 | 82 |
| Comparative Example 3 | Li doped | 3 | 0 | / | 60 | 49 | 45 | 18 | 1390 | 89 | 80 | 62 | 46 | 30 | 97 | 92 | 83 | 67 |
| Comparative Example 4 | Li doped | 5 | 0 | / | 62 | 51 | 47 | 20 | 1358 | 88.8 | 81 | 63 | 51 | 32 | 98 | 92 | 84 | 70 |
| Comparative Example 5 | Mg doped | 3 | 0 | / | 64 | 56 | 40 | 19 | 1425 | 82.3 | 84 | 69 | 50 | 34 | 98 | 92 | 84 | 76 |
| Comparative Example 6 | Mg doped | 5 | 0 | / | 65 | 1400 | 82.2 | 20 | 1400 | 82.2 | 83 | 70 | 54 | 34 | 98 | 93 | 86 | 77 |
| Comparative Example 7 | / | | | | 60 | 47 | 43 | 13 | 1572 | 754 | 76 | 1572 | 75.4 | 21 | 88 | 80 | 69 | 52 |
| Comparative Example 8 | / | | | | 53 | 41 | 34 | 11 | 1560 | 75 | 66 | 1560 | 75 | 9 | 80 | 67 | 50 | 36 |

According to Table 1, the secondary battery made of the silicon-based lithium storage material formed by the preparation method of the silicon-based lithium storage material described in the embodiment of present application shows high lithium removal capacity, high first coulombic efficiency and good cycle performance.

Referring to Fig. 6 and Fig. 7, comparing the first-week battery cyclic voltammetry curves of Example 1 and Comparative Example 1, the SEI generation potential of Example 1 is increased to about 0.35V. According to the first-week battery cyclic voltammetry curve of Example 7, the highest lithium intercalation potential is significantly increased to 2.3V. Therefore, the silicon-based lithium storage material of the embodiment of this application may obviously improve the electrochemical behavior in the early lithium intercalation process.

In summary, after reading the contents of this application, those skilled in the art may understand that the foregoing application contents may be presented by way of example only, and may not be limiting. Although it is not explicitly stated here, those skilled in the art may understand that this application is intended to cover various reasonable changes, improvements and modifications to the embodiments. These changes, improvements and modifications are all within the spirit and scope of the exemplary embodiments of this application.

It should be understood that the term "and/or" used in this embodiment includes any or all combinations of one or more of the associated listed items. It should be understood that when an element is referred to as "connected" or "coupled" to another element, it may be directly connected or coupled to the other element, or intervening elements may also be present.

Similarly, it should be understood that when an element such as a layer, region or substrate is referred to as "on" another element, it may be directly on the other element, or intervening elements may also be present. On the contrary, the term "directly" means that there are no intervening elements. It should also be understood that the terms "comprising", "comprise", "including" or "includes", when used in this document, indicate the existence of the recited features, integers, steps, operations, elements and/or components, but do not exclude the existence or addition of one or more other features, integers, steps, operations, elements, components and/or their combinations.

It should also be understood that although the terms first, second, third, etc. may be used herein to describe various elements, these elements should not be limited by these terms. These terms are only used to distinguish one element from another. Therefore, a first element in some embodiments may be referred to as a second element in other embodiments without departing from the teachings of this application. The same reference numerals or the same reference symbols indicate the same elements throughout the specification.

Furthermore, the specification of this application describes exemplary embodiments by referring to idealized exemplary cross-sectional views and/or plan views and/or perspective views. Therefore, differences from the shapes shown in the drawings due to, for example, manufacturing techniques and/or tolerances are foreseeable. Therefore, the exemplary embodiments should not be interpreted as being limited to the shapes of the regions shown here, but should include deviations in the shapes caused by, for example, manufacturing. For example, an etched area shown as a rectangle will usually have circular or curved features. Therefore, the regions shown in the drawings are schematic in nature, and their shapes are not intended to show the actual shapes of the regions of the devices or to limit the scope of the exemplary embodiments.

## Claims

1. A silicon-based lithium storage material, **characterized in that**, comprising:
an inner core, comprising silicon elements with a valence of 0-4;
a first shell layer, the first shell layer covers or partially covers the inner core, the first shell layer comprises a fluorocarbon layer, and the fluorocarbon layer comprises a fluorocarbon.

2. The silicon-based lithium storage material according to claim 1, **characterized in that**, the first shell layer further comprises a carbon material layer, the carbon material layer is located between the inner core and the fluorocarbon layer, and the carbon material layer comprises a carbon material.

3. The silicon-based lithium storage material according to claim 2, **characterized in that**, 0<N_{F}/N_{C}≤1.5, wherein N_{F} is the molar amount of fluorine in the first shell layer, and N_{C} is the molar amount of carbon in the first shell layer.

4. The silicon-based lithium storage material according to claim 3, **characterized in that**, the carbon material includes at least one of amorphous carbon or graphitized carbon.

5. The silicon-based lithium storage material according to claim 1, **characterized in that**, the mass of the first shell layer accounts for 0.5%-10% of the total mass of the silicon-based lithium storage material.

6. The silicon-based lithium storage material according to claim 1, **characterized in that**, the thickness of the first shell layer is between 1nm and 50nm.

7. The silicon-based lithium storage material according to claim 1, **characterized in that**, the inner core further comprises a doping element R, the doping element R comprises at least one of elements of main group I-VI, wherein 0≤N_{R}/N_{Si(0∼4)}≤1.5, N_{R} is the molar amount of the doping element R, and N_{Si(0∼4)} is the molar amount of silicon elements with a valence of 0-4.

8. The silicon-based lithium storage material according to claim 7, **characterized in that**, the doping element R includes at least one of O, N, C, Li, Mg, Ca, Al, P and Be.

9. The silicon-based lithium storage material according to claim 1, **characterized in that**, further comprising a second shell layer, wherein the second shell layer covers or partially covers the first shell layer, and the second shell layer comprises a lithium fluoride compound.

10. The silicon-based lithium storage material according to claim 9, **characterized in that**, the mass of the second shell layer accounts for 0.1%-2% of the total mass of the silicon-based lithium storage material.

11. A preparation method for a silicon-based lithium storage material, **characterized in that**, comprising:
providing an inner core material, wherein the inner core material comprises silicon elements with a valence of 0-4;
depositing a carbon material on the surface of the inner core material to form a carbon material layer;
the first structure further comprises silicon grains, and the size of the silicon grains is no more than 10nm;
Carring out a fluorination treatment with the carbon material layer, enabling all or part of the carbon material layer to convert into a fluorocarbon layer to form a first shell layer.

12. The preparation method according to claim 11, **characterized in that**, the fluorination treatment is carried out on the carbon material layer with fluorine-containing gas, and 0<N_{F}/N_{C}≤1.5, wherein N_{F} is the molar amount of fluorine in the first shell layer, and N_{C} is the molar amount of carbon in the first shell layer.

13. The preparation method according to claim 12, **characterized in that**, the fluorine-containing gas includes at least one of F₂, NF₃ and ClF₃.

14. The preparation method according to claim 12, **characterized in that**, the temperature of the fluorination treatment is 20°C-600°C.

15. The preparation method according to claim 11, **characterized in that**, further comprising:
placing the inner core material coated with the first shell layer in a lithium solution;
removing the solvent of the lithium solution after the inner core material coated with the first shell adsorbs the lithium solution;
carrying out heat treatment process to enable the lithium ion in the lithium solution to react with the inner core material, and a lithium compound is attached to the surface of the first shell layer;
Cooling the lithium compound and the first shell layer to a specific temperature, carrying out fluorination treatment on the lithium compound to convert the lithium compound into a lithium fluoride compound, and forming a second shell layer on the surface of the first shell layer.

16. The preparation method according to claim 15, **characterized in that**, the solvent of the lithium solution comprises at least one of naphthalene, anthracene, tetrahydrofuran and N-methylpyrrolidone.

17. The preparation method according to claim 15, **characterized in that**, the temperature of the heat treatment is 400°C-600°C.

18. The preparation method according to claim 15, **characterized in that**, after the heat treatment process, the lithium ion reacts with the inner core material to form lithium silicate, and the lithium compound attached to the surface of the first shell layer includes at least one of lithium hydroxide and lithium carbonate.

19. The preparation method according to claim 11, **characterized in that**, the inner core material further comprises a doping element R, the doping element R comprises at least one of elements of main group I-VI, wherein 0≤N_{R}/N_{Si (0~4)} ≤1.5, N_{R} is the molar amount of the doping element R, and N_{Si (0∼4)} is the molar amount of silicon elements with a valence of 0-4.

20. The preparation method according to claim 19, **characterized in that**, the doping element R includes at least one of O, N, C, Li, Mg, Ca, Al, P and Be.

21. The preparation method according to claim 11, **characterized in that**, the carbon material includes at least one of amorphous carbon or graphitized carbon.

22. The preparation method according to claim 11, **characterized in that**, the mass of the first shell layer accounts for 0.5%-10% of the total mass of the silicon-based lithium storage material, the mass of the second shell layer accounts for 0.1%-2% of the total mass of the silicon-based lithium storage material.
